# EUROPÄISCHE PATENTANMELDUNG

(11) **EP 1 961 992 A2**
(43) Veröffentlichungstag der Anmeldung: **27.08.2008**
(21) Anmeldenummer: 08002352.6
(22) Anmeldetag: 08.02.2008
(51) Int. Cl.: F16F 15/02

(54) **Vorrichtung und Verfahren zur aktiven Schwingungsdämpfung bei gegenläufig rotierenden Walzen**

(30) Priorität: 10.02.2007 DE 102007006683
(71) Anmelder: Winkler + Dünnebier AG, 56562 Neuwied (DE)
(72) Erfinder: Dennert, Martin, 56321 Brey (DE); Lindenlauf, Frank, Dr., 56566 Neuwied (DE); Pankoke, Steffen, Dr., 97837 Erlenbach (DE)

(57) **Zusammenfassung**

Es wird eine Vorrichtung bzw. ein Verfahren zur aktiven Schwingungsdämpfung zweier gegenläufig rotierender Walzen (2,3) beschrieben. Hierbei werden wenigstens ein Sensor (8) zur Erfassung der Schwingung an wenigstens einer Walze, ein Regler (9) zur Verarbeitung der von dem wenigstens einen Sensor erfassten Schwingungsdaten und zur Abgabe wenigstens eines auf diesen Schwingungsdaten beruhenden Steuersignals sowie wenigstens ein Aktor (10) verwendet, der auf Basis des wenigstens einen Steuersignals wenigstens eine der Walzen mit einer der Schwingung entgegenwirkenden Kraft beaufschlagt. Erfindungsgemäß wirkt der wenigstens eine Aktor auf die Mantelfläche (31) der entsprechenden Walze/n ein.

## Beschreibung

### I. Anwendungsgebiet

Die vorliegende Erfindung bezieht sich auf eine Vorrichtung sowie auf ein Verfahren zur aktiven Schwingungsdämpfung insbesondere periodisch auftretender Schwingungen bei gegenläufig rotierenden Walzen wie Prägewalzen, Druckwalzen oder Schneidwalzen.

### II. Technischer Hintergrund

Während des Betriebs gegenläufig rotierender Walzen kann es zu unerwünschten Schwingungen der Walzen kommen, die die Qualität des zwischen den Walzen stattfindenden Bearbeitungsschritts negativ beeinflussen können.

Gegenläufig rotierende Walzen werden beispielsweise bei Prägeverfahren, Druckverfahren oder rotativen Schneideverfahren verwendet. Hierbei wird zwischen die Walzen jeweils eine entsprechende Materialbahn geführt, die dann je nach dem angewendeten Verfahren geprägt, bedruckt, gerillt, perforiert oder geschnitten wird.

Insbesondere bei der Verwendung des Einprägens eines Prägemusters in eine Materialbahn oder einzelne Zuschnitte, beispielsweise im Zusammenhang mit Tissueservietten oder Tissuetaschentüchern, die aus mehreren Lagen Tisssuepapier bestehen und deren Tissuelagen durch Verprägen miteinander zusammengehalten werden, treten aufgrund der Prägekräfte im Wesentlichen periodische Schwingungen auf, die sich unter anderem auf die Qualität des Prägemusters auswirken. Dieses auch als "Rattern" bezeichnete Phänomen führt zur ungleichen Ausprägung der Produkte.

Dieser Problematik kann durch verschiedene, im Stand der Technik bekannte Vorrichtungen und/oder Verfahren entgegengewirkt werden, wobei diese jedoch mit den unterschiedlichsten Nachteilen verbunden sind.

Beispielsweise können besondere, anregungsarme Prägemuster verwendet werden. Dies hat jedoch den Nachteil, dass der Benutzer aufgrund der festgelegten Prägemuster nur einen eingeschränkten Gestaltungsgrad bei der Herstellung eines Produktes hat.

Auch ist es möglich, die in der Materialbahn gegebenenfalls nebeneinander liegenden Einzelbahnen zueinander zu versetzen, um einen gleichzeitigen Eingriff mehrerer Querprägungen zu vermeiden. Auch diese Lösung ist nur beschränkt einsetzbar und verringert die Gestaltungsfreiheit des Benutzers hinsichtlich der Wahl der Prägemuster.

Weiterhin können die Höhen der Prägepunkte auf der Prägewalze unterschiedlich hoch ausgebildet werden, wobei dies bei gleich bleibender Qualität der Prägung nur gleichzeitig mit einem Einsatz vertiefter Innenfelder auf der Prägewalze möglich ist. Dies bedingt jedoch unausweichlich einen höheren Aufwand bei der Herstellung der Walzen.

Neben diesen Möglichkeiten wird im Stand der Technik auch ein Verfahren bzw. eine Vorrichtung vorgeschlagen, bei dem die Prägewalzen einen geschichteten Aufbau aufweisen. Hierbei wird zwischen einen Grundkörper und der die Mantelfläche bildenden Hülse der Walze eine dämpfende Gummischicht eingebracht. Auch dies bringt jedoch einen ungleich höheren Aufwand bei der Herstellung der Walzen mit sich.

Schließlich existieren zur Schwingungsdämpfung bei gegenläufig rotierenden Walzen auch diverse aktive Schwingungsdämpfungssysteme.

So wird beispielsweise in der DE 101 07 135 A1 ein Verfahren zur Schwingungsdämpfung bei einer Rollendruckmaschine beschrieben. In dieser Druckschrift ist eine aktive Dämpfung vorgesehen, bei der auftretende Lageabweichungen zumindest einer Walze erfasst werden und jeweils entgegengerichtete Dämpfungskräfte auf die zumindest eine Walze gegeben werden. Die Dämpfungskräfte werden mittels eines Aktors erzeugt, der in Abhängigkeit der erfassten Lageabweichungen angesteuert wird, wobei der Aktor auf die Lagerung der zumindest einen Walze einwirkt.

Auch in der DE 10 2005 058 786 A1 wird ein Verfahren und eine Vorrichtung zur Schwingungsreduktion eines Zylinders einer bahnverarbeitenden Maschine beschrieben, bei dem ein Zapfen des Zylinders mittelbar oder unmittelbar mit Kräften von wenigstens einem Aktor beaufschlagt wird.

Die bekannten Lösungen haben sich jedoch bezüglich ihrer Effizienz nicht als hinreichend befriedigend erwiesen. Dies kann möglicherweise auch als Grund dafür angesehen werden, dass im Bereich von Tissuemaschinen bisher nach Kenntnis der Anmelderin keine aktiven Dämpfungssysteme eingesetzt wurden.

### III. Darstellung der Erfindung

### a) Technische Aufgabe

Es ist daher die Aufgabe der vorliegenden Erfindung, eine Vorrichtung und ein Verfahren zur aktiven Schwingungsdämpfung zweier gegenläufig rotierender Walzen zu schaffen, die/das zu einer effektiveren Verringerung der im Prozess auftretenden Schwingungen führt.

### b) Lösung der Aufgabe

Diese Aufgabe wird mittels einer Vorrichtung und mittels eines Verfahrens mit den Merkmalen der Ansprüche 1 und 8 gelöst. Weitere Ausgestaltungen der vorliegenden Erfindung ergeben sich aus den Unteransprüchen.

Erfindungsgemäß wird vorgeschlagen, die beim Betrieb auftretenden Schwingungen an wenigstens einer Walze mit wenigstens einem Sensor zu erfassen und die erfassten Schwingungsdaten an einen Regler zu übergeben. Anhand der Schwingungsdaten ermittelt der Regler wenigstens ein entsprechendes Steuersignal und übergibt dieses/diese an wenigstens einen Aktor, der daraufhin wenigstens eine Walze mit einer der Schwingung entgegenwirkenden Kraft beaufschlagt. Der Aktor wirkt dabei auf die Mantelfläche der entsprechenden Walze/n ein.

Hierbei können auch die Schwingungen beider Walzen mit zwei getrennten Sensoren erfasst und an denselben oder an zwei verschiedene Regler übergegeben werden. Der gemeinsame Regler beziehungsweise die beiden Regler können dann voneinander unabhängig oder in einer definierten Abhängigkeit voneinander Steuersignale erzeugen. Die erzeugten Steuersignale können dann dazu verwendet werden, einen beziehungsweise mehrere Aktoren, der/die entweder nur auf eine Walze oder aber auch auf beide Walzen einwirkt/einwirken anzusteuern.

Auch wäre es denkbar, dass für jede Walze mehrere Sensoren vorhanden sind, um die Schwingungen der Walze zu erfassen.

Da aber üblicherweise eine Dämpfung der an einer Walze auftretenden Schwingungen sich auch auf Schwingungen des aus beiden Walzen bestehenden Gesamtsystems auswirken, werden vorzugsweise Schwingungen nur an einer der beiden gegenläufig rotierenden Walzen erfasst und auch nur auf eine der Walzen mit einem Aktor eingewirkt. Hierbei muss es sich jedoch nicht zwangsweise um dieselbe Walze handeln.

Bei den Sensoren kann es sich hierbei um berührungslose Sensoren handeln, die beispielsweise über eine optische Erfassung die jeweilige Lage der Walze/n ermitteln. Vorzugsweise handelt es sich bei den Sensoren jedoch um solche, die mit der entsprechenden Walze in Kontakt stehen und direkt die auf die Walze wirkenden Beschleunigungen und somit die auf die Walze wirkenden Kräfte erfassen.

Für den in der erfindungsgemäßen Vorrichtung bzw. in dem erfindungsgemäßen Verfahren verwendeten Regler kommt jeder geeignete Regler in Frage. Insbesondere kann es sich hierbei um einen Regler mit einem nichtlinearen Reglungsverfahren handeln, der darüber hinaus vorteilhafterweise im Sinne einer adaptiven Regelung selbstlernend sein kann.

Vorzugsweise kann der Regler in diesem Fall in Abhängigkeit von äußeren, vorgegebenen Parametern wie beispielsweise dem zu verarbeitenden Material, der Rotationsgeschwindigkeit, der Stärke des Materials oder dem Prägemuster voreingestellt werden, wobei sich die optimale Regelung im Betrieb dann aufgrund einer entsprechenden Programmierung des Regler selbstständig einstellt.

Als Aktor wird vorzugsweise ein Piezoelement verwendet, wobei jedoch auch andere Lösungen, beispielsweise hydraulisch geregelte Betätigungselemente oder ähnliches denkbar wären.

Vorzugsweise ist der Aktor so angeordnet, dass er axial gesehen im Wesentlichen in der Walzenmitte auf die Mantelfläche der entsprechenden Walze/n einwirkt. Auf diese Weise kann eine symmetrische Krafteinleitung erreicht werden.

Für den Fall mehrerer auf eine Walze wirkender Aktoren sind diese vorzugsweise bzgl. der axialen Richtung symmetrisch angeordnet.

Bei einer bevorzugten Ausführungsform sind der Sensor und/oder der Aktor in einer Strebe angeordnet, die vorteilhafterweise über wenigstens zwei Laufrollen mit der entsprechenden Walze in Kontakt steht. Der in der Strebe angeordnete Aktor wirkt dann über die Laufrollen auf die Mantelfläche der entsprechenden Walze ein. Vorzugsweise sind die Laufrollen zur besseren Verteilung der wirkenden Kräfte symmetrische bezüglich der Strebe angeordnet.

Im Falle von Walzen, die im Wesentlichen vertikal übereinander liegend angeordnet sind oder deren Anordnung zueinander wenigstens eine vertikale Komponente aufweist, kann die Strebe vorzugsweise so angeordnet sein, dass sie sich im Wesentlichen vertikal unterhalb der weiter unten angeordneten Walze befindet oder zumindest bezüglich dieser ebenfalls eine vertikale Komponente aufweist, und die weiter unten angeordneten Walze auf diese Weise unterstützend lagert. Hierbei können die Laufrollen im Querschnitt gesehen dann vorzugsweise symmetrisch um den untersten Punkt der Mantelfläche der Walze angeordnet sein.

Auf der der Walze gegenüberliegenden Seite ist die Strebe vorzugsweise auf einer Grundplatte des Walzensystems bzw. dem Boden abgestützt. Eine derartige Anordnung der Strebe führt dazu, dass die Strebe die untere Walze von unten unterstützt und lagert.

Falls die Strebe vorzugsweise axial gesehen in der Mitte des Walzenkörpers angeordnet ist, ergibt sich dann eine mittlere Auflagerung des Walzenkörpers, wodurch die aufgrund des Eigengewichts auftretende Durchbiegung des Walzenkörpers nach unten zumindest teilweise ausgeglichen werden kann.

Natürlich wäre es hier auch denkbar, mehrere in Axialrichtung der entsprechenden Walze voneinander beabstandete Streben mit Aktoren und/oder Sensoren zu verwenden, wobei diese dann vorzugsweise symmetrisch zur axialen Mitte der Walze angeordnet sind.

In einer bevorzugten Ausführungsform handelt es sich bei den beiden Walzen um eine Prägewalze und eine glatte Gegenprägewalze, wobei der Aktor auf die Gegenprägewalze einwirkt. Dies hat den Vorteil, dass die Mantelfläche der Walze, auf die der Aktor einwirkt, glatt ist, so dass bei der Beaufschlagung der Walze mit Kraft keine Oberflächenstruktur der Mantelfläche berücksichtigt werden muss.

Wie bereits oben erwähnt wurde, ist die Anwendung der erfindungsgemäßen Vorrichtung bzw. des erfindungsgemäßen Verfahrens nicht auf Prägewalzen beschränkt, vielmehr ist auch eine Anwendung auf Druckwalzen oder Schneidwalzen möglich.

### c) Ausführungsbeispiel

Nachfolgend wird eine Ausführungsform der vorliegenden Erfindung beispielhaft anhand der beigefügten Zeichnungen beschrieben. Es zeigen:
- Fig. 1:: eine Aufsicht auf eine Ausführungsform einer erfindungsgemäßen Vorrichtung zur aktiven Schwingungsdämpfung im Fall eines Systems aus zwei gegenläufig rotierenden Prägewalzen und
- Fig. 2:: einen Querschnitt des in Figur 1 dargestellten Systems entlang der Linie A-A, wobei aus Gründen der Übersichtlichkeit nur die untere Walze sowie die auf diese wirkende erfindungsgemäße Vorrichtung dargestellt sind.

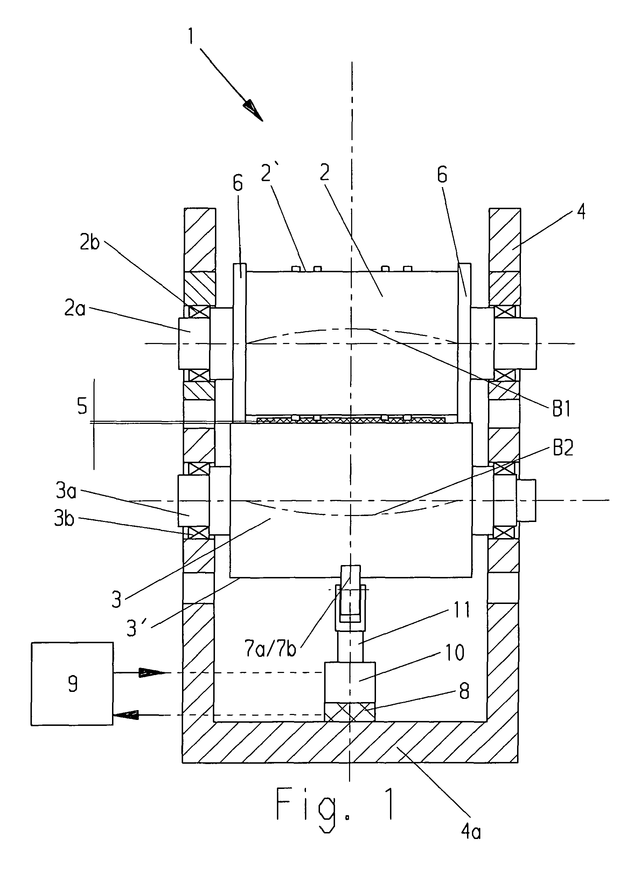

Bei dem in Figur 1 dargestellten System handelt es sich um eine Prägestation 1 mit den beiden gegenläufig rotierenden Walzen 2, 3. Die in dem gemeinsamen Rahmen 4 oben angeordnete Walze 2 ist hierbei die mit Prägepunkte versehene Prägewalze, während es sich bei der unten angeordnete Walze 3 um eine glatte Gegenprägewalze handelt.

Die beiden Walzen 2,3 sind in ihrem gemeinsamen Rahmen 4 mit ihren Lagerzapfen 2a bzw. 3a auf herkömmliche Weise in entsprechenden Lagern 2b beziehungsweise 3b rotierbar gelagert. Im Randbereich der jeweiligen Mantelflächen 2',3' der Walzen 2,3 rollt die Walze 2 mit ihren sogenannten Stützringen (auch als "Schmitzringe" bekannt) 6 auf der Mantelfläche 3' der Walze 3 ab. Diese Stützringe 6 stehen in Radialrichtung über die sonstige Mantelfläche 2' der Walze 2 vor, so dass sich im mittleren Bereich zwischen den Walzen 2,3 ein entsprechend definierter Prägespalt 5 bildet, durch den das zu bearbeitende Material üblicherweise in Form einer Materialbahn geführt wird.

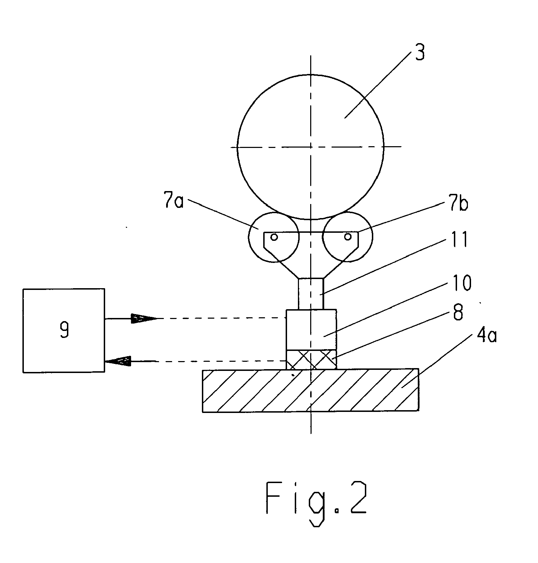

Die durch den Prägevorgang auf die Walzen 2,3 wirkende Verformung ist in Fig. 2 durch die Biegelinien B1 und B2 angedeutet. Hierbei ist zu berücksichtigen, dass die Linien üblicherweise auch durch das Eigengewicht der Walzen 2,3 beeinflusst werden, wobei dies vorliegend erfindungsgemäß jedoch gerade nicht der Fall ist, wie weiter unten dargestellt wird.

Bei der in Figur 1 dargestellten Ausführungsform der vorliegenden Erfindung ist im axial gesehen mittleren Bereich unterhalb der Prägewalze 3 eine Strebe 11 angeordnet, die, wie auch in Figur 2 zu erkennen ist, über zwei Laufrollen 7a, 7b mit der Mantelfläche 3' der Walze 3 in Kontakt steht. Mit ihrer der Walze 3 abgewandten Unterseite ist die Strebe 11 auf einer Bodenplatte 4a des Rahmens 4 der Prägestation 1 abgestützt.

Wie sich aus Fig. 2 ergibt, sind die beiden Laufrollen 7a, 7b bzgl. der Position der Strebe 11 symmetrisch angeordnet, um eine gleichmäßigere Verteilung der wirkenden Kräfte und eine stabile Gleichgewichtslage zu erreichen.

In der Strebe 11 sind ein Sensor 8 und ein Aktor 10 angeordnet, die über einen Regler 9 miteinander in Verbindung stehen. Hierbei werden die im Betrieb auf die Walze 3 wirkenden Schwingbeschleunigungen vom Sensor 8 erfasst und an den Regler 9 übergeben. Dieser erzeugt aus den übergebenen Schwingungsdaten ein Steuersignal und führt dieses dem Aktor 10, vorliegend in Form eines Piezoelements, zu. Auf Basis des vom Regler 9 erzeugten Steuersignals beaufschlagt der Aktor 10 dann die Mantelfläche 3' der Walze 3 über die Laufrollen 7a,7b mit einer der Schwingung entgegenwirkenden Kraft.

Da bei der dargestellten Ausführungsform die Strebe 11 gleichzeitig als Auflage für den mittleren Bereich der Walze 3 und somit mittelbar auch für die Walze 2 dient, kann der durch das Eigengewicht der Walzen 2,3 bewirkte Anteil der Prägebiegungen reduziert bzw. ggf. ausgeglichen werden, so dass sich im wesentlichen die in Fig. 1 dargestellten symmetrischen Biegelinien B1 und B2 ergeben.

Im Betrieb der Prägestation 1 wird der Regler 9 zunächst in Abhängigkeit von äußeren, vorgegebenen Parametern voreingestellt. Aufgrund seiner adaptiven Funktionalität passt sich der Regler 9 im weiteren Verlauf dann an die tatsächlich auftretenden und vom Sensor 8 erfassten Schwingungen der Walzen 2,3 an und stellt eine optimale Dämpfung der Schwingung durch den Aktor 10 sicher.

### BEZUGSZEICHENLISTE

- 1: Prägestation
- 2: Prägewalze
- 2': Mantelfläche von 2
- 2a: Lagerzapfen von 2
- 2b: Lager von 2
- 3: Gegenprägewalze
- 3': Mantelfläche von 3
- 3a: Lagerzapfen von 3
- 3b: Lager von 3
- 4: Rahmen
- 4a: Bodenplatte
- 5: Prägespalt
- 6: Stützringe
- 7a,b: Laufrollen
- 8: Sensor
- 9: Regler
- 10: Aktor
- 11: Strebe
- B1: Biegelinie von 2
- B2: Biegelinie von 3

## Patentansprüche

1. Vorrichtung zur aktiven Schwingungsdämpfung zweier gegenläufig rotierender Walzen (2,3) umfassend
• wenigstens einen Sensor (8) zur Erfassung der Schwingung an wenigstens einer Walze (3),
• einen Regler (9) zur Verarbeitung der von dem wenigstens einen Sensor (8) erfassten Schwingungsdaten und zur Abgabe eines auf diesen Schwingungsdaten beruhenden Steuersignals und
• wenigstens einen Aktor (10), der auf Basis des Steuersignals wenigstens eine der Walzen (3) mit einer der Schwingung entgegenwirkenden Kraft beaufschlagt
**dadurch gekennzeichnet, dass**
der Aktor (10) derart angeordnet ist, dass er auf die Mantelfläche (3') der entsprechenden Walze/n (3) einwirkt.

2. Vorrichtung nach Anspruch 1,
**dadurch gekennzeichnet, dass**
der Aktor (10) derart angeordnet ist, dass er axial gesehen im Wesentlichen in der Walzenmitte auf die Mantelfläche (3') der entsprechenden Walze/n (3) einwirkt.

3. Vorrichtung nach einem der vorangehenden Ansprüche
**dadurch gekennzeichnet, dass**
der Sensor (8) und/oder der Aktor (10) in einer Strebe (11) angeordnet sind, die über wenigstens zwei Laufrollen (7a,7b) mit der entsprechenden Walze (3) in Kontakt steht.

4. Vorrichtung nach Anspruch 3,
**dadurch gekennzeichnet, dass**
im Falle von Walzen (2,3), deren Anordnung zueinander eine vertikale Komponente aufweist, die Strebe (11) derart angeordnet ist, dass sie bezüglich der weiter unten angeordneten Walze (3) ebenfalls eine vertikale Komponente aufweist und die weiter unten angeordneten Walze (3) unterstützend lagert.

5. Vorrichtung nach einem der vorangehenden Ansprüche,
**dadurch gekennzeichnet, dass**
es sich bei den beiden Walzen (2,3) um eine Prägewalze (2) und eine glatte Gegenprägewalze (3) handelt, wobei der Aktor (10) auf die Gegenprägewalze (3) einwirkt.

6. Vorrichtung nach einem der vorangehenden Ansprüche,
**dadurch gekennzeichnet, dass**
es sich bei dem Aktor (10) um ein Piezoelement handelt.

7. Vorrichtung nach einem der vorangehenden,
**dadurch gekennzeichnet, dass**
der Regler (9) in Abhängigkeit von äußeren vorgegebenen Parametern einstellbar ist.

8. Verfahren zur aktiven Schwingungsdämpfung zweier gegenläufig rotierender Walzen (2,3) umfassend die Schritte,
• Erfassen der Schwingung an wenigstens einer Walze (3) mit wenigstens einem Sensor (8),
• Übergabe der erfassten Schwingungsdaten an einen Regler (9),
• Ermittlung wenigstens eines auf den Schwingungsdaten beruhenden Steuersignals durch den Regler (9),
• Übergabe des wenigstens einen Steuersignals an wenigstens einen Aktor (10), und
• Beaufschlagung wenigstens einer Walze (3) mit einer der Schwingung entgegenwirkenden Kraft durch den wenigstens einen Aktor (10)
**dadurch gekennzeichnet, dass**
wenigstens ein Aktor (10) auf die Mantelfläche (3') der entsprechenden Walze/n (3) einwirkt.

9. Verfahren nach Anspruch 8,
**dadurch gekennzeichnet, dass**
wenigstens ein Aktor (10) axial gesehen im Wesentlichen in der Walzenmitte auf die Mantelfläche (3') der entsprechenden Walze/n (3) einwirkt.

10. Verfahren nach Anspruch 8 oder Anspruch 9,
**dadurch gekennzeichnet, dass**
der Regler (9) in Abhängigkeit von äußeren vorgegebenen Parametern voreingestellt wird und sich seine optimale Regelung im Betrieb aufgrund einer entsprechenden adaptiven Programmierung des Reglers (9) selbständig einstellt.
